# EUROPEAN PATENT SPECIFICATION

(11) **EP 3 839 553 B1**
(45) Date of publication and mention of the grant of the patent: **13.03.2024**
(21) Application number: 19218437.2
(22) Date of filing: 20.12.2019
(51) Int. Cl.: G01S 7/481, G01S 17/931, G01S 17/10, G01S 17/89

(54) **LIDAR IMAGING APPARATUS FOR A MOTOR VEHICLE**
LIDAR-BILDGEBUNGSVORRICHTUNG FÜR EIN KRAFTFAHRZEUG
APPAREIL D'IMAGERIE LIDAR POUR VÉHICULE À MOTEUR

(43) Date of publication of application: 23.06.2021
(73) Proprietor: Veoneer Sweden AB, 447 83 Vårgårda (SE)
(72) Inventor: SIMU, Jacob, 583 30 Linköping (SE); ANDERSSON, Jörgen, 583 30 Linköping (SE); BÄCKSTRÖM, Erik, 583 30 Linköping (SE)
(74) Representative: Müller Verweyen

(56) References cited:
- EP-A1- 3 428 678
- US-A1- 2019 302 235

## Description

The invention relates to a vision system for a vehicle comprising at least one light source arranged on an emitting side adapted to generate at least one light beam, at least one receiving unit arranged on a receiving side with a light deflection device comprising an array of light deflection elements, wherein each light deflection element is adapted to redirect light which is incident on said light deflection element from a scanned surface in an environment of the vehicle, and to change the direction of the redirected light between at least a first deflection direction and a second deflection direction, and a light sensing device to sense light redirected from the light deflection device in said first deflection direction, and a data processing device.

Such systems are generally known, for example from WO 2012 123809 A1 and WO 2014 125153 A1. Herein, a surface is illuminated by a light beam that originates from a light source, typically a laser light source, and is reflected by the surface. The reflected light beam is incident on a light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight. To extend the field of view a plurality of such systems could be installed in or on the vehicle which would necessitate an according plurality of light sources. These laser light sources together with potentially present scanning devices to redirect the laser beam are the most expensive part of the assembly, leading to high overall costs.

Another approach to extend the field of view with only a single light source is to rotate a combined laser/detector unit. This requires additional electronic and mechanic parts to rotate and control the unit, and these systems typically cover a scene that is narrow in the vertical direction or with limited spatial resolution. Further, the presence of moving parts may lead to complications in the maintenance of the device due to mechanical wear or other undesirable effects, such as noise and vibration, which can be relevant depending on the desired final use of the system.

Furthermore, lidar systems may comprise light emitting sections to produce laser by a laser light source with light beam guides, e.g. mirrors, apertures, guiding fibers and lens objectives for collimating, spreading and scanning issues. These systems further comprise receiving sections with entrance lens systems, alternatively an entrance window, to guide beam portions of the emitted light beam, which are reflected by a scanned surface or objects in the scanned area, onto the detectors. A very compact embodiment of such lidar system is a coaxial lidar system. Here, the entrance path of the reflected light beam portion is identical to the emitting path of the emitted light beam. Emitting lens systems and entrance lens systems can be the same. Inside of such a combined emitting section and receiving section, the two light beams have to be separated to different paths. Usually this is realized by the optical transmitter and receiver having a beam splitter and/or mirror and a narrow aperture in order to let the emitting light beam pass the splitter and to redirect the incoming reflected light beam portion onto the detecting unit. This solution involves a lot of adjustment and tuning and partial beam losses cannot be avoided.

The aforementioned alternatives need to be improved with regard to the beam quality, cost-effectiveness, maintenance, and the simplicity of the assembly.

EP 3 428 678 A1 discloses a vision system with the features of the preamble of claim 1.

US 2019/302235 A1 discloses a lidar system with a set of light sources and a set of optical fiber elements optically coupled to said light sources.

The object of the invention is to provide a vision system and a vision method for a vehicle with a transceiver geometry which improves laser light characteristics and is particularly cost-effective and simple.

The invention solves this problem with the features of the independent claims. The system according to the present invention comprises an emitting side adapted to generate at least one light beam, wherein the emitting side comprises at least one optical fiber which is adapted to guide said light beam, wherein an emitting end of said optical fiber is cut in a specific angle to separate the exiting light beam from a reflected light beam portion and to redirect the reflected light beam portion into the receiving unit. According to the invention, the cut and polished end of the optical transceiver acts as an aperture and mirror for the receiving light. The main advantage of said construction is that the optical source, mirror and aperture is implemented in one part, reducing cost and complexity. There is no or very limited adjustment and tuning in the production process, furthermore the outgoing laser beam will have very low divergence due to small size of the optical emitter at the fiber end and a high receiving efficiency, since there are no losses in for example a beam splitter. The system can optimally be implemented in coaxial Lidar systems.

The invention is particularly cost-effective due to the small build size of the single part in comparison to alternatives with beam splitters and apertures or mirrors including holes as aperture.

The invention is applicable to any kind of vehicles, in particular motor vehicles and non-motorized vehicles, like cars, drones, boats, trains, airplanes and so on.

In a preferred embodiment, the vision system comprises an optical beam splitting arrangement on the emitting side for generating a plurality of light beams from said light beam, wherein said light beams are emitted into the environment of the vehicle for scanning said surface. The optical beam splitting arrangement on the emitting side is fed from the at least one light source by the at least one light beam. The at least one light beam can be a single light beam emitted from a single light source only or a plurality of light beams. The properties of potentially different light beams could be the same, but the light beams could also differ in their wavelength, polarization, and/or intensity.

The optical beam splitting arrangement advantageously generates a plurality of light beams which could also have different or equal properties. The light beams are emitted in the environment of the vehicle preferably by a plurality of emitting units, wherein more preferably, the number of light beams equals the number of emitting units or is selectable with respect to the amount of power desired in a particular direction. The vision system comprises a plurality of receiving units, wherein each receiving unit is preferably adapted to receive and sense at least one of the light beams directly reflected by the scanned surface.

Preferably, the optical beam splitting arrangement comprises a plurality of optical fibers fed by at least one laser light source. The optical fibers are used for transmission of light, preferably laser beams. The use of flexible optical fibers allow a particular simple positioning of the at least one light source and of the plurality of emitting units within the vehicle. The light beam generated by the at least one light source could be transmitted to other optical components comprised in the optical beam splitting arrangement to generate the at least one light beam. The plurality of light beams is transmitted via optical fibers to the plurality of emitting units, where the light beams exit the corresponding optical fibers at the angled-cut emitting end of the optical fibers. The optical beam splitting arrangement can comprise one or more bundles of optical fibers, or one or more bundles of fiber-optic units, to enable a higher peak power of light beams transmitted to desired emitting units.

Preferably, the emission of the at least one light beam into the environment is performed and/or controlled by beam redirection by an optical system. The optical system my comprise a scanning device and/or a lens system for widening each light beam. This optical system may also be adapted to collimate the incoming reflection of the light beam and guide it to the angled-cut emitting end of the optical fiber. The lens systems for outgoing and corresponding incoming beams can be the same.

Preferably, the number of optical fibers, or optical fiber units or bundles, is greater than or equal to the number of light sources to provide the plurality of emitting units with a corresponding number of beams. Preferably, the number of optical fiber units is greater than or equal to the number of receiving units to enable the possibility of combining several fibers in one emitting unit to allow for higher emitted power. This may be implemented in coaxial multibeam Lidar systems.

In a preferred embodiment, the number of light beams equals the number of receiving units. Each receiving unit is adapted to receive one light beam emitted at an angled-cut emitting end of a specific optical fiber that corresponds to one of the plurality of receiving units in a way that a reflected beam portion of the specific outgoing light beam is redirected to the corresponding receiving unit by the angled-cut emitting end acting as a beam deflector.

Preferably, the vision system comprises one or more scanning devices which are controllable to direct the emitted light beam into different directions into the vehicle environment. The at least one scanning device is arranged on the emitting side of the optical unit and is adapted to redirect the light beam into the environment. Embodiments without scanning device are possible.

Advantageously, the number of light sources is one. Since the light source, preferably a laser, more preferably a fiber laser, is the most expensive part of the vision system, this embodiment is particularly cost-effective. The light beam generated by the light source could preferably be divided or split into a plurality of light beams feeding the emitting units.

Preferably, the at least one light source, preferably a fiber-coupled laser source, can be placed in an external unit. By fiber-optical guides, the at least one light beams can easily be tracked into the system housing, so the angle-cut emitting ends of the optical fibers are positioned at the emitting units. Therefore, with arranging the laser source outside the embedded system, it is prevented to overheat.

It is advantageous that each receiving unit is arranged to receive light in a different direction from the environment. This allows coverage of a particularly wide field of view. Preferably, several receiving units with a certain field of view could be adapted to receive light from different directions. This leads to a field of view that is composed of the field of views of the individual receiving units and the composed field of view is larger than the field of view of a single receiving unit.

In a preferred embodiment, at least one light source, the at least one light sensing device and the data processing device form at least one LIDAR system adapted to measure time-of-flight values. The time-of-flight is the runtime of the light beam and/or a portion of a light beam from the light source via reflection by the scanned surface in the vehicle's environment, until sensing by the light sensing device in the vision system. The time-of-flight corresponds to the distance between the vision system and the scanned surface, which is estimated or computed by the data processing device.

By an appropriate scanning technique, preferably realized by at least one scanning device that directs the emitted light beam to the scanned surface, the environment can be scanned.

The spatial resolution depends on the number of deflection elements comprised in the deflection device, the laser repetition rate, and on the number of light sensors comprised in the light sensing element. The measurement of the time-of-flight values can acquire depth information on a z-axis in addition to x- and y-coordinates given by the scanning procedure. In a preferred embodiment wherein the light source is a laser, the vision system comprises a LIDAR system.

In a preferred embodiment the at least one light sensing device comprises focal plane arrays, PIN, photo diodes, avalanche photo diodes, photomultiplier tubes, single photon avalanche diodes, or an array of any of the aforementioned, and/or are adapted to detect light in the range of UV, near infrared, short/mid/long wavelength infrared, and/or sub-mm/THz band, preferably wideband visible, and near infrared or short wavelength infrared. Sensors for LIDAR can be PIN photo diodes, avalanche photo diodes, single photon avalanche diodes and photomultiplier tubes, either based on Silicon or InGaAs technologies. Also arrays of the aforementioned devices can be comprised in the light sensing device. The radiometric measurement could preferably be used to modify the responsivity of the light sensing device to enhance stability, frame rate, and/or other features of the light sensing device. Further, an interesting feature of the system is its ability to perform foveated imaging procedures, that is, to adjust the spatial resolution in scanning or detecting some region of interest, e.g., a pedestrian or a cyclist at the side of the vehicle, or some long distance obstacle on the road.

In the following the invention shall be illustrated on the basis of preferred embodiments with reference to the accompanying drawings as non-limiting cases, wherein:
- Fig. 1: shows a schematic view of a vision system;
- Fig. 2: shows a vision system mounted on a vehicle;
- Fig. 3: shows an embodiment of an optical unit of the vision system; and
- Fig. 4: shows an embodiment of an angled-cut emitting end of an optical fiber.

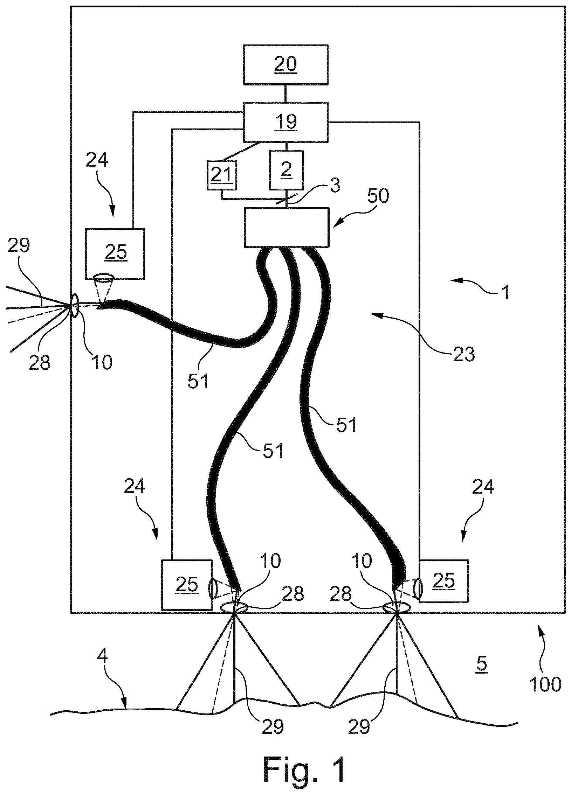

According to figure 1, the vision system 1 is mounted in or on a vehicle 100 to capture images of a scanned surface 4 in the environment 5 of the vehicle 100. The vision system 1 comprises an emitting unit 23 which comprises an optical beam splitting arrangement 50, optical fibers 51, and a light source 2 to emit a light beam 3. The system further comprises receiving units 25 which are arranged on a receiving side 24 and a data processing device 19. The vision system 1 could include other detection systems and/or sensors such as radar or other cameras. The vision system 1 could preferably communicate with a driver assistance device 20.

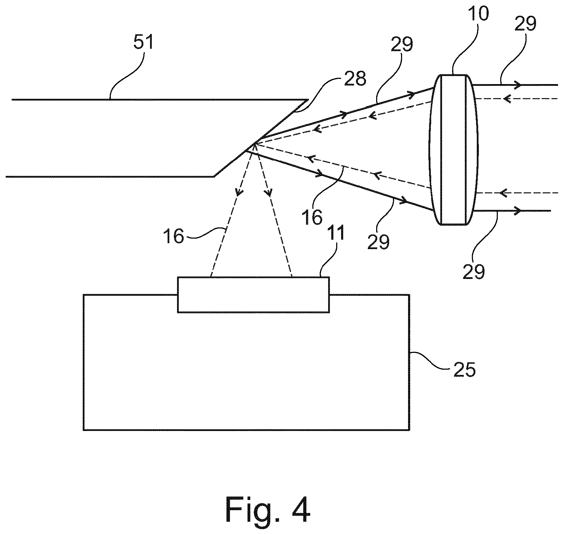

The light source 2 is adapted to emit a light beam 3. In some embodiments, like in Figures 1 to 3, the light beam 3 can be fed to an optical beam splitting arrangement 50 on the emitting side 23 to split the light beam 3 into at least two light beams 29. In other embodiments, like in Figure 4, an optical beam splitting arrangement 50 may not be necessary.

The light source 2 preferably comprises a laser, including laser diodes, fiber lasers, etc., such that the vision system 1 is a LIDAR system. But also other embodiments of the light source 2 are possible, e.g. LEDs, or polarized light sources of different wavebands, adapted to correspond with the recording capabilities of a light sensing device 8 which is comprised in one or more of the receiving units 25.

The light beam 3 is preferably divided or split, and a portion of the light beam 3 is directed towards a trigger device 21 to allow an accurate time-of-flight estimation. The trigger device 21 is preferably in communication with the data processing device 19 to schedule or trigger the time-of-flight measurements. The trigger device 21 is preferably acting on the light beam 3, such that only one trigger device 21 is necessary for performing the time-of-flight measurements in all receiving units 25. More generally, the number of trigger devices 21 is lower than the number of receiving units 25, and can correspond to the number of light sources 2. Alternatively, the occurrence of the emitted light pulse is electronically derived from the known latency between the electronic triggering of the light pulse and the actually emitted light.

Preferably, the optical beam splitting arrangement 50 comprises optical fibers 51 to guide the plurality of light beams 29 to be emitted into the environment 5. In this embodiment three light beams 29 are generated and transmitted by the optical fibers 51 by way of example. The light beam 3 could preferably be guided in an optical fiber to the optical beam splitting arrangement 50 in a flexible manner. The plurality of light beams 29 is transmitted via optical fibers 51 towards an emitting end 28 of the optical fibers 51 so that the receiving units 25 are able to detect light beam portions emitted at the emitting side 23 and reflected by the scanned surface 4.

The emission of the plurality of light beams 29 into the environment 5 could be performed and/or controlled by beam redirection by a scanning device, and/or widening of each light beam 3, 29, for example by a first lens system 10. Also a gal-vanometric mirror or other redirection means can be used for scanning. The light beam 29 will have very low divergence due to the small size of the optical emitter 28 at the fiber end.

In the embodiment of Figures 1 to 4, to each light beam 29 a receiving unit 25 is assigned, such that the light resulting from the reflection of a particular light beam 29 by the scanned surface 4 enters the corresponding receiving unit 25. The reflected beam portion 16 is directed towards the angled-cut emitting end 28 of the optical fiber 51.

The light beams 29 eventually interact with the environment 5, in particular with a scanned surface 4 or dust, snow, rain, and/or fog, where the light beams 29 are reflected. For each light beam 29, the reflected portion 16 of the light beam 29 enters the corresponding receiving unit 25 on the receiving side 24 preferably through a second lens system 11.

The reflected beam portion 16 of the light beam 29 is guided, preferably by the first lens system 10, towards the emitting end 28 of the optical fiber 51 (Figure 4). The emitting end 28 is polished and cut in a specific angle to separate the exiting light cone 29 from the accepted incoming light cone 16. By that, the cut and polished end acts as an aperture and mirror for the receiving light 16. Therefore, the receiving efficiency is very high due to the absence of losses in e.g. additional beam splitters, mirrors and apertures. The reflected beam portion 16 can be directed to the corresponding receiving unit 25 and enters the receiving unit 25 via a second lens system 11 or an entrance window 11. Inside the receiving unit 25 the incoming light beam 16 can further be processed by mirrors and/or splitters to be guided towards several scanners and detectors.

The light entering each receiving unit 25 is sensed by the corresponding light sensing device 8 and the sensed image data is processed preferably in a combined manner with data fusion by the data processing device 19 to generate an overall field of view from the fields of view of the individual receiving units 25.

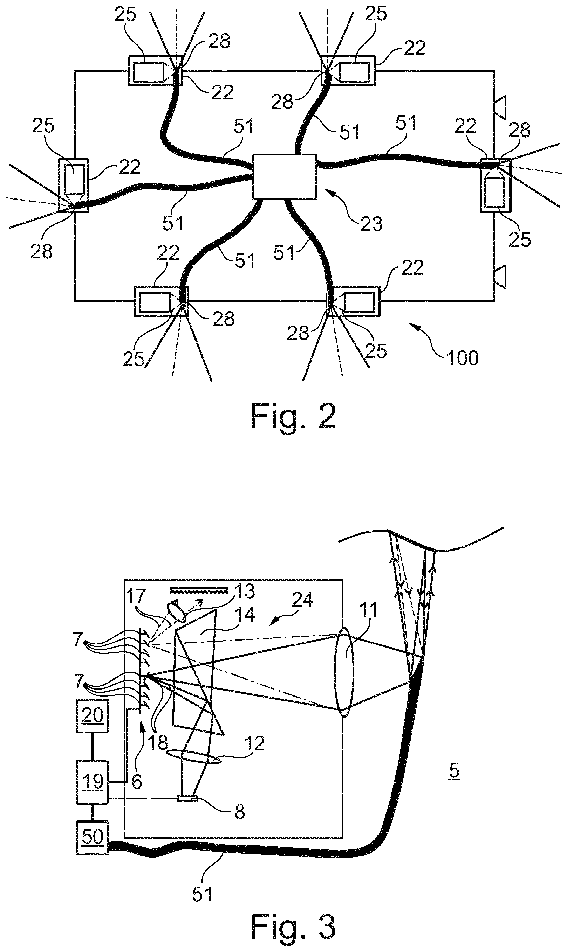

In the embodiment shown in figure 1, the vision system 1 comprises three receiving units 25 and three optical fibers 51. Another embodiment with a different number and positioning of optical fibers 51 and receiving units 25 is illustrated in figure 2 as a non-limiting example of the multiple sensor approach.

Figure 2 shows a vision system 1 with a plurality of receiving units 25 mounted on a vehicle 100, where it is understood that each receiving unit 25 corresponds to an optical fiber or fiber bundle 51. Figure 2 is a top view of the vehicle 100 and the front of the vehicle 100 corresponds to a part of the vehicle 100 which indicates the field of view of the corresponding receiving unit 25. Preferably, the emitting end 28 of each fiber bundle 51 is arranged close to, and in the same optical unit 22 with, the corresponding receiving unit 25. Consequently, the number of optical units 22 can correspond to the number of receiving units 25 and/or to the number of optical fibers / fiber bundles 51, although this is not mandatory. Several fibers 51 can be combined to allow higher emitted power in selected directions.

In Figure 2 the fields of view of the individual receiving units 25 are indicated. In this embodiment, one receiving unit 25 is mounted in the front part and directed towards the front of the vehicle 100, two receiving units 25 are mounted in the left and right and directed towards the left and right, respectively, and one receiving unit 25 is mounted in the back part and directed towards the back. Each unit 25 on the left or the right can be directed in different directions to allow a wider combined field of view.

The plurality of receiving units 25 could be adapted to measure different properties of incident light, more preferably power, wavelength, and/or polarization. All wavelength, and/or combinations of a plurality of wavelengths, could preferably be received by one or more of the plurality of receiving units 25. In one embodiment, each one of the light beams 29 has different properties, more preferably power, wavelength, and/or polarization.

One or more light sources 2 could be used, but the number of light sources 2 is lesser than the number of receiving units 25. Advantageously, the light source is arranged in an external unit preventing the system from overheat. The path of the several light beams 29 can easily be managed by the flexible optical fibers 51.

In another embodiment, additional one or more beam splitters can be arranged in the optical path of one or more of the light beams 29. For example, to feed a group of emitting ends 28, a single light beam 29 could be directed by the optical fiber 51 towards the group of emitting ends 28, where the light beam 29 is split and the split portions of the light beam 29 are guided to the emitting ends 28 to be emitted into the environment 5.

When a larger range is required for an emitting unit 25 to observe the environment 5 far apart, several optical fibers 51 and/or fiber-optic units can be bundled together to enable a higher peak power of the light beam 29. For example, if more range is required in the forward direction of a moving vehicle, two or more laser bundles can be combined into the same emitting unit 23 to emit two or more times the power of a single laser beam. To adjust the field of view, the range, the spatial resolution and/or other technical details, the specifications of the light beams 29 may not be equivalent for each light beam 29 emitted by the emitting unit 23.

It is possible to mount each receiving unit 25 and the corresponding end 28 of the corresponding fiber / fiber bundle 51 in a corresponding optical unit 22 which is adapted to emit and receive light as shown in Figures 2, 3 and 4.

In the following, preferred details of an optical unit 22 are explained. The light beam 29 can in some embodiments be redirected by a scanning device, for example a mirror rotatable around at least one axis. The light beam 29 can in some embodiments be widened by suited optical components, e.g., a first system of lenses 10, which may defocus, and thereby widen, the light beam 29, towards the scanned surface 4. The scanning device, like a mirror, a group of mirrors, a prism arrangement such as Risley prisms, and/or other suited optical component and/or a group thereof, is adapted to be controllable by and in communication with the data processing device 19. The scanning device, which may in particular be a MEMS device, is preferably adapted to be rotatable around at least two axes and/or a plurality of scanning devices is adapted to rotate around at least one axis, allowing scanning of the environment 5 of the vehicle 100. For example a first scanning device could be arranged to perform the rotation around a first axis and a second scanning device could be arranged to perform a rotation around a second axis. In another embodiment, a cylindrical lens could be used to widen the light beam 3, 29.

By means of the scanning device, the light beam 29 can be directed sequentially towards different points or spots on the scanned surface 4. In other embodiments, the scanning device can be dispensed with.

A portion of the light beam 29 is reflected on the scanned surface 4 or by other reflectors and/or scatterers in the environment 5, and a reflected light beam portion 16 of the light beam 29 enters the optical unit 22, e.g., by passing a second lens system 11, alternatively an entrance window. The first lens system 10 and the second lens system 11 can be the same. The light beam portion 16 is directed towards the angled-cut emitting end 28 of the optical fiber and sequentially directed towards the receiving unit 25 of the optical unit 22. The light beam portion 16 travelling through the optical unit 22 is preferably directed towards a prism 14 placed in the optical path of the light beam portion 16 within the optical unit 22, allowing for optical path division and/or light deflection.

The light beam portion 16 is directed towards a light deflection device 6 comprising a plurality of light deflection elements 7, each of which is adapted to deflect the light beam portion 16 and to change the direction of the redirected light between at least a first deflection direction as a first light beam portion 18 and a second deflection direction as a second light beam portion 17. The first light beam portion 18 preferably is deflected via the prism 14, and is directed to, and incident on, the light sensing device 8 preferably through a third lens system 12.

Preferably, the second light beam portion 17 is directed to a dump element to reduce light scattering within the receiving unit 28 and/or the optical unit 22, or more preferably through a fourth lens system 13 to a light detecting device enabling the capturing of image data, which can be of different types, including, e.g., RGB image data, a polarimetric image, a false color image, and/or some other type. The data of the light detecting device, preferably the image data of certain pixels acquired by the light detecting device, could be integrated or averaged to yield a single-valued background light intensity value as a radiometric measurement to adjust the light sensing device 8 and/or light detecting device, or pluralities thereof, advantageously.

Preferably, the light deflection device 6 is a DMD, i.e., a digital micro mirror device. The deflection device 6 is in communication with the data processing device 19. The data processing device 19 is adapted to control the deflection elements 7. Alternatives for the deflection device 6 to the DMD may be other active optical elements, in particular pixelated arrays (such as LCDs) or even deformable mirrors. It may also be possible, that there are in fact no deflection elements 7 at all, but the angle-cut emitting end 28 of the optical fiber is directing the incoming light beam portion 16 onto a light sensing device 8 directly, therefore acting as light deflection device 6. In regard to fig. 3, the angle-cut fiber end 28 would then preferably be located in the area where the DMD is shown and the fiber 51 would be located inside the optical unit 22.

The data processing device 19 can comprise a pre-processor adapted to control the capture of images, time-of-flight measurements, and/or other data by the light sensing device 8 and the light detecting device and the control of the deflection device 6, receive the electrical signal containing the information from the light sensing device 8 and the light detecting device and from the light deflection device 6. The pre-processor may be realized by a dedicated hardware circuit, for example a Field Programmable Gate Array (FPGA) or an Application Specific Integrated Circuit (ASIC). Alternatively the pre-processor, or part of its functions, can be realized in the data processing device 19 or a System-On-Chip (SoC) device comprising, for example, FPGA, processing device, ARM and/or microprocessor functionality.

The data processing device 19 is preferably a digital device which is programmed or programmable and preferably comprises a microprocessor, micro-controller, digital signal processor (DSP, processing device), field programmable gate array (FPGA), or a System-On-Chip (SoC) device, and preferably has access to, or comprises, a memory device. The data processing device 19, pre-processing device and the memory device are preferably realized in an on-board electronic control unit (ECU) and may be connected to other components of the vision system 1 via a separate cable or a vehicle data bus. In another embodiment the ECU and one or more of the vision systems 1 can be integrated into a single unit. All steps from data acquisition, imaging, depth estimations, pre-processing, processing to possible activation or control of driver assistance device can be performed automatically and continuously during driving in real time.

A plurality of receiving units 25 and/or optical units 22 could communicate with separate data processing devices 19, communicate with a single data processing device 19, or work with a master-slave configuration. In particular, the images recorded from the environment 5 could be used for physical calibration of the plurality of the receiving units 25 and/or optical units 22 to cover a large composed field of view. It is also possible that a set of receiving units 25 and/or optical units 22 is grouped together and controlled by a common, but not centralized, data processing device 19, depending on the functionality. For example, receiving units 25 and/or optical units 22 in the front part of the vehicle could be grouped together. Also the specifications of groups of the receiving units 25 and/or optical units 22 could be equal or different to enhance the functionality of the vision system 1.

Image and data processing is carried out by corresponding software in the data processing device 19. The image and data processing in the processing unit 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The driver assistance device 20 may be able to trigger defined driver assistance action to assist the driver, e.g. braking, acceleration, steering, showing information etc., based on the data provided by the data processing device 19. The data processing device 19 can also be used as input to highly automated, piloted, and/or autonomous driving functions in a vehicle.

## Claims

1. A vision system (1) for a motor vehicle (100) comprising
- at least one light source (2) arranged on an emitting side (23) adapted to generate at least one light beam (3,29);
- at least one receiving unit (25) arranged on a receiving side (24) with a light deflection device (6), wherein the light deflection device (6) is adapted to redirect light which is incident on said light deflection device (6) from a scanned surface (4) in an environment (5) of the vehicle (100), and a light sensing device (8) to sense light redirected from the light deflection device (6) ;
- a data processing device (19); wherein
- said vision system (1) comprises at least one optical fiber (51), which is adapted to guide said light beam (3,29) which exits the at least one optical fiber (51) at an emitting end (28) of the optical fiber (51); **characterized in that**
- the emitting end (28) of the optical fiber (51) is angled-cut to separate the exiting light beam (3,29) from a reflected light beam portion (16) of the light beam (3,29) and to redirect the reflected light beam portion (16) into the receiving unit (25), said emitting end (28) acting as a mirror receiving said reflected light beam portion (16) and therefore acting as a beam deflector.

2. The vision system as claimed in claim 1, **characterized in that** the vision system (1) comprises an optical beam splitting arrangement (50) on the emitting side (23) for generating a plurality of light beams (29) from said light beam (3), wherein said light beams (29) are emitted into the environment (5) of the vehicle (100) for scanning said surface (4).

3. The vision system as claimed in claim 2, **characterized in that** said vision system (1) comprises a plurality of optical fibers (51), or bundles of optical fibers (51), wherein each optical fiber (51), or each bundle of optical fibers (51), is adapted to guide one of said light beams (29).

4. The vision system as claimed in any one of the preceding claims, **characterized in that** said vision system (1) comprises an optical system (10,11) which is adapted for widening the emitted light beam (3,29) and for collimating the reflected light beam portion (16) and guiding the reflected light beam portion (16) towards the angled-cut emitting end of the optical fiber (51).

5. The vision system as claimed in claim 3, **characterized in that** the number of optical fibers (51), or bundles of optical fibers (51), is greater than or equal to the number of light sources (2).

6. The vision system as claimed any one of the preceding claims, **characterized in that** the number of light sources (2) is one.

7. The vision system as claimed any one of the preceding claims, **characterized in that** the vision system (1) comprises at least one scanning device arranged on the emitting side (23) and controllable to direct the light beam (3,29) into different directions into the vehicle environment (5).

8. The vision system as claimed in any one of the preceding claims, **characterized in that** the light source (2) is arranged in an external unit.

9. The vision system as claimed in any one of the preceding claims, **characterized in that** each receiving unit (25) is arranged to receive light in a different direction from the environment (5).

10. The vision system according to any one of the preceding claims, **characterized in that** the at least one light source (2), the at least one light sensing device (8), and the data processing device (19) form at least one LIDAR system to measure a set of time of flight values.

11. The vision system (1) according to any one of the preceding claims, **characterized in that** the at least one light sensing device (8) comprises avalanche photo diodes, photomultiplier tubes, single photon avalanche diodes, phased arrays, or an array of any of the aforementioned and the light sensing device (8) is adapted to detect light in the range of UV, near infrared, short/mid/long wavelength infrared, and/or sub-mm/THz band, preferably wideband visible, and near infrared or short wavelength infrared.

## Patentansprüche

1. Ein Sichtsystem (1) für ein Kraftfahrzeug (100), umfassend
- mindestens eine auf einer Emitterseite (23) angeordnete Lichtquelle (2), die dazu eingerichtet ist, mindestens einen Lichtstrahl (3, 29) zu erzeugen;
- mindestens eine auf einer Empfangsseite (24) angeordnete Empfangseinheit (25) mit einer Lichtablenkungsvorrichtung (6), wobei die Lichtablenkungsvorrichtung (6) dazu eingerichtet ist, Licht, das von einer abgetasteten Oberfläche (4) in einer Umgebung (5) des Fahrzeugs (100) auf die Lichtablenkungsvorrichtung (6) auftrifft, umzulenken, und eine Lichterfassungsvorrichtung (8), um von der Lichtablenkungsvorrichtung (6) umgelenktes Licht zu erfassen;
- eine Datenverarbeitungsvorrichtung (19); wobei
- das Sichtsystem (1) mindestens eine optische Faser (51) umfasst, die dazu eingerichtet ist, den Lichtstrahl (3, 29) zu leiten, der aus der mindestens einen optischen Faser (51) an einem emittierenden Ende (28) der optischen Faser (51) austritt; **dadurch gekennzeichnet, dass**
- das emittierende Ende (28) der optischen Faser (51) abgeschrägt ist, um den austretenden Lichtstrahl (3, 29) von einem reflektierten Lichtstrahlteil (16) des Lichtstrahls (3, 29) zu separieren und den reflektierten Lichtstrahlteil (16) in die Empfangseinheit (25) umzulenken, wobei das emittierende Ende (28) als ein Spiegel wirkt, der den reflektierten Lichtstrahlteil (16) empfängt und daher als ein Strahlablenker wirkt.

2. Das Sichtsystem nach Anspruch 1, **dadurch gekennzeichnet, dass** das Sichtsystem (1) auf der Emitterseite (23) eine optische Strahlteileranordnung (50) zur Erzeugung mehrerer Lichtstrahlen (29) aus dem Lichtstrahl (3) umfasst, wobei die Lichtstrahlen (29) in die Umgebung (5) des Fahrzeugs (100) zum Scannen der Oberfläche (4) emittiert werden.

3. Das Sichtsystem nach Anspruch 2, **dadurch gekennzeichnet, dass** das Sichtsystem (1) eine Vielzahl von optischen Fasern (51) oder Bündeln von optischen Fasern (51) umfasst, wobei jede optische Faser (51) oder jedes Bündel von optischen Fasern (51) dazu eingerichtet ist, einen der Lichtstrahlen (29) zu leiten.

4. Das Sichtsystem nach einem der vorangehenden Ansprüche, **dadurch gekennzeichnet, dass** das Sichtsystem (1) ein optisches System (10, 11) umfasst, das dazu eingerichtet ist, den emittierten Lichtstrahl (3, 29) aufzuweiten und den reflektierten Lichtstrahlteil (16) zu kollimieren und den reflektierten Lichtstrahlteil (16) in Richtung des abgeschrägten emittierenden Endes der optischen Faser (51) zu führen.

5. Das Sichtsystem nach Anspruch 3, **dadurch gekennzeichnet, dass** die Anzahl der optischen Fasern (51) oder der Bündel von optischen Fasern (51) größer oder gleich der Anzahl der Lichtquellen (2) ist.

6. Das Sichtsystem nach einem der vorangehenden Ansprüche, **dadurch gekennzeichnet, dass** die Anzahl der Lichtquellen (2) eins ist.

7. Das Sichtsystem nach einem der vorangehenden Ansprüche, **dadurch gekennzeichnet, dass** das Sichtsystem (1) mindestens eine Scanvorrichtung umfasst, die auf der Emitterseite (23) angeordnet und steuerbar ist, um den Lichtstrahl (3, 29) in verschiedene Richtungen in die Fahrzeugumgebung (5) zu richten.

8. Das Sichtsystem nach einem der vorangehenden Ansprüche, **dadurch gekennzeichnet, dass** die Lichtquelle (2) in einer externen Einheit angeordnet ist.

9. Das Sichtsystem nach einem der vorangehenden Ansprüche, **dadurch gekennzeichnet, dass** jede Empfangseinheit (25) so angeordnet ist, dass sie Licht in einer anderen Richtung aus der Umgebung (5) empfängt.

10. Das Sichtsystem nach einem der vorangehenden Ansprüche, **dadurch gekennzeichnet, dass** die mindestens eine Lichtquelle (2), die mindestens eine Lichterfassungsvorrichtung (8) und die Datenverarbeitungsvorrichtung (19) mindestens ein LIDAR-System zur Messung einer Reihe von Flugzeitwerten bilden.

11. Das Sichtsystem (1) nach einem der vorangehenden Ansprüche, **dadurch gekennzeichnet, dass** die mindestens eine Lichtsensorvorrichtung (8) Avalanche-Photodioden, Photomultiplier-Röhren, Einzelphotonen-Avalanche-Dioden, Phased Arrays, oder ein Array aus einem der vorgenannten umfasst und die Lichtsensorvorrichtung (8) dazu eingerichtet ist, Licht im Bereich des UV, des nahen Infrarots, des kurzwelligen/mittelwelligen/langwelligen Infrarots und/oder des Sub-mm/THz-Bands, vorzugsweise des sichtbaren Breitbands und des nahen Infrarots oder des kurzwelligen Infrarots, zu erfassen.

## Revendications

1. Un système de vision (1) pour un véhicule à moteur (100) comprenant
- au moins une source de lumière (2) agencée sur un côté émetteur (23) conçu pour générer au moins un faisceau lumineux (3, 29) ;
- au moins une unité de réception (25) agencée sur un côté récepteur (24) avec un dispositif de déviation de lumière (6), dans lequel le dispositif de déviation de lumière (6) est conçu pour rediriger de la lumière qui est incidente sur ledit dispositif de déviation de lumière (6) à partir d'une surface balayée (4) dans un environnement (5) du véhicule (100), et un dispositif de détection de lumière (8) pour détecter la lumière redirigée à partir du dispositif de déviation de lumière (6) ;
- un dispositif de traitement de données (19) ; dans lequel
- ledit système de vision (1) comprend au moins une fibre optique (51) qui est conçue pour guider ledit faisceau lumineux (3, 29) qui sort de l'au moins une fibre optique (51) à une extrémité d'émission (28) de la fibre optique (51) ;
**caractérisé en ce que**
- l'extrémité d'émission (28) de la fibre optique (51) est coupée en biais afin de séparer le faisceau lumineux (3, 29) sortant d'une partie de faisceau lumineux réfléchie (16) du faisceau lumineux (3, 29) et de rediriger la partie de faisceau lumineux réfléchie (16) vers l'unité de réception (25), ladite extrémité d'émission (28) agissant comme un miroir recevant ladite partie de faisceau lumineux réfléchie (16) et agissant ainsi comme déviateur de faisceau.

2. Le système de vision selon la revendication 1, **caractérisé en ce que** le système de vision (1) comprend un agencement de division de faisceau optique (50) sur le côté émetteur (23) pour générer une pluralité de faisceaux lumineux (29) à partir dudit faisceau lumineux (3), dans lequel lesdits faisceaux lumineux (29) sont émis dans l'environnement (5) du véhicule (100) pour balayer ladite surface (4).

3. Le système de vision selon la revendication 2, **caractérisé en ce que** ledit système de vision (1) comprend une pluralité de fibres optiques (51), ou faisceaux de fibres optiques (51), dans lequel chaque fibre optique (51), ou chaque faisceau de fibres optiques (51), est conçu(e) pour guider un desdits faisceaux lumineux (29).

4. Le système de vision selon l'une quelconque des revendications précédentes, **caractérisé en ce que** ledit système de vision (1) comprend un système optique (10, 11) qui est conçu pour élargir le faisceau lumineux émis (3, 29) et pour collimater la partie de faisceau lumineux réfléchie (16) et guider la partie de faisceau lumineux réfléchie (16) en direction de l'extrémité d'émission coupée en biais de la fibre optique (51).

5. Le système de vision selon la revendication 3, **caractérisé en ce que** le nombre de fibres optiques (51), ou de faisceaux de fibres optiques (51), est supérieur ou égal au nombre de sources de lumière (2).

6. Le système de vision selon l'une quelconque des revendications précédentes, **caractérisé en ce que** le nombre de sources de lumière (2) est égal à un.

7. Le système de vision selon l'une quelconque des revendications précédentes, **caractérisé en ce que** le système de vision (1) comprend au moins un dispositif de balayage agencé sur le côté émetteur (23) et pouvant être commandé de façon à diriger le faisceau lumineux (3, 29) dans différentes directions dans l'environnement de véhicule (5).

8. Le système de vision selon l'une quelconque des revendications précédentes, **caractérisé en ce que** la source de lumière (2) est agencée dans une unité externe.

9. Le système de vision selon l'une quelconque des revendications précédentes, **caractérisé en ce que** chaque unité de réception (25) est agencée pour recevoir de la lumière dans une direction différente à partir de l'environnement (5).

10. Le système de vision selon l'une quelconque des revendications précédentes, **caractérisé en ce que** l'au moins une source de lumière (2), l'au moins un dispositif de détection de lumière (8) et le dispositif de traitement de données (19) forment au moins un système LIDAR pour mesurer un ensemble de valeurs de temps de vol.

11. Le système de vision (1) selon l'une quelconque des revendications précédentes, **caractérisé en ce que** l'au moins un dispositif de détection de lumière (8) comprend des photodiodes à avalanche, des tubes photomultiplicateurs, des diodes à avalanche monophotoniques, des réseaux à commande de phase, ou un réseau d'un des éléments susmentionnés et le dispositif de détection de lumière (8) est conçu pour détecter de la lumière dans le domaine UV, proche infrarouge, infrarouge à ondes courtes/moyennes/longues et/ou la bande submillimétrique/THz, de préférence visible à large bande, et proche infrarouge ou infrarouge à ondes courtes.
